# EUROPEAN PATENT APPLICATION

(11) **EP 1 792 950 A1**
(43) Date of publication of application: **06.06.2007**
(21) Application number: 05783693.4
(22) Date of filing: 08.09.2005
(51) Int. Cl.: C09B 67/48, C09B 67/52, G03G 9/09, B41M 5/00, C09B 7/10, C09B 48/00, C09D 11/00, B41J 2/01

(54) **INTERMEDIATE CHEMICAL SUBSTANCE IN PIGMENT CRYSTAL PRODUCTION STAGE, PROCESS FOR PRODUCING PIGMENT CRYSTAL FROM THE SAME, AND CRYSTALLINE PIGMENT**

(30) Priority: 08.09.2004 JP 2004261386
(71) Applicant: CANON KABUSHIKI KAISHA, Ohta-ku Tokyo 146-8501 (JP)
(72) Inventor: ISHIKAWA, Takayuki, CANON KABUSHIKI KAISHA, Tokyo 1468501 (JP); NAGASHIMA, Akira, CANON KABUSHIKI KAISHA, Tokyo 1468501 (JP); KAWABE, Minako, CANON KABUSHIKI KAISHA, Tokyo 1468501 (JP); SUGAMA, Sadayuki, CANON KABUSHIKI KAISHA, Tokyo 1468501 (JP)
(74) Representative: TBK-Patent
(86) International application number: PCT/JP2005/017004
(87) International publication number: WO 2006/028285

(57) **Abstract**

There is provided a method for producing pigment crystals with sufficiently high purity and sufficiently controlled crystal type, particle size, and aggregation property and dispersibility to obtain a pigment crystal that can be suitably used in both a solid phase and a liquid phase. The method for producing pigment crystals (S₃) from a pigment precursor (S₀) using retro Diels-Alder reaction, the method comprising producing the pigment crystals (S₃) from the pigment precursor (S₀) through a first displacement structure (S₁) and a second displacement structure (S₂), which differ from the pigment precursor (S₀) and the pigment crystals (S₃) and also differ from at least from each other.

## Description

### TECHNICAL FIELD

The present invention relates to a novel method for producing pigment crystals, and a pigment crystal obtained by the method.

### BACKGROUND ART

To date, dyes have been used as coloring materials for ink-jet recording liquid (ink) requiring high definition. An ink using dye provides images with features such as high degree of transparency, high definition and superior color rendering property, but in many cases it is inferior in image fastness such as light fastness and water resistance. In recent years, to cope with the inferiority in light fastness and water resistance of the image, pigment inks have been manufactured that use in place of dyes organic pigments and carbon black as coloring materials. Thus coloring materials used for ink have been shifting from dye to pigment in view of increasing image fastness.

A dye, and an ink using the dye, has been disclosed that is prepared to have a group compatible with a given solvent and thus is soluble in the solvent, wherein the group compatible with the given solvent may be detached by retro Diels-Alder reaction resulting in an irreversible decrease in the solubility for the solvent (Patent document 1). The coloring material may be made insoluble (i.e., in a pigment state) in the solvent to increase image fastness by subjecting it to retro Diels-Alder reaction. However, external energy, such as heat, light, electromagnetic wave and radiation, is applied to produce the above reaction of the compound dissolved in a solvent (i.e., in a dye-like state) when applied onto a recording material.

In addition, a method has been disclosed by which a compound (dye) undergoing retro Diels-Alder reaction is applied onto a recording medium containing a metal compound, and the compound (dye) undergoing retro Diels-Alder reaction is subjected to retro Diels-Alder reaction to form a pigment. (Patent document 9) Although the resultant pigment has been converted on the recording medium to a pigment insoluble in the solvent, the resultant image is subject to considerable color irregularities. Examination of the image with various apparatus such as X-ray diffractometer revealed heterogeneous pigment formation, mixed crystals and aggregation, and indicated the necessity for homogeneous crystallization of pigment to provide satisfactory images.

In addition, a phase change ink has been disclosed that uses a polymerization compound capable of thermally reversible Diels-Alder reaction as a temperature viscosity control material for ink-jet ink carrier (Patent document 2). This invention is disadvantageous in that because of reversible reaction, cooling under a reduced solubility condition can induce cyclization and cause solubility to increase.

In addition, a method of controlling polarity (solubility, agglutination property) has been disclosed that uses decomposition reaction by the UV light and heat of a triaryl methane compound, and optically and thermally reversible compounds such as photochromic compounds (Patent document 3). Although irreversible state may be formed because the polar region is decomposed through radical ion cleavage, oxidation degradation reaction can be induced due to extreme instability of by-product. In addition, because photochromic reaction is a reversible reaction for visible and UV light and heat, maintaining a constant state is difficult.

Furthermore, a method of improving image fastness is disclosed that causes Diels-Alder reaction of ink when applied onto a recording material (Patent document 4). In addition, a method of preventing a yellowing event due to retro Diels-Alder reaction incited by a component of a recording medium is disclosed that involves potent dienophile contained in the recording medium as a component to produce Diels-Alder reaction (Patent document 5).

Some pigments have two or more crystal types even when the chemical formula, composition and structure are the same, and are referred to as polymorph. Examples include types α, β and ε of copper phthalocyanine blue, and these have different absorption coefficients and refractive indices and hence different hues and opacifying properties. Organic pigments are not only used in the coating industry as coloring material but also in the electronics industry, for example, as a charge generation agent for electrophotography photoreceptors, a recording medium coloring matter for CD-R and DVD-R, a coloring agent for toner and ink-jet printer inks, a color filter coloring matter for liquid crystal display devices, and a luminescent material for organic EL devices. To use organic pigments for the uses above, it is first important that they have high purity and specific absorption characteristics. Absorption characteristics depend on the chemical structure, particle size, crystal type and purity of the pigment. Many organic pigments in particular have a plurality of pigment crystals types even when the chemical structure is same, so ensuring high purity while controlling the crystal type is an important point in developing a novel organic pigment.

For example, various organic pigments have been used as a charge generation material for electrophotography photoreceptors, and there is a strong need for a pigment having high-sensitivity absorption characteristics for semiconductor laser light and near infrared light, which represents the emission wavelength of LED light. As an organic pigment meeting this requirement, phthalocyanines have been studied extensively. Phthalocyanines vary in absorption spectrum and photoconductivity according to the pigment crystals type as well as the type of the central metal, and in some reports a specific pigment crystals type has been selected from phthalocyanines with the same central metal for electrophotography photoreceptors.

For metal-free phthalocyanines, the pigment crystals type X has been reported to have high photoconductivity, and sensitivity for near infrared light of 800 nm or more, while for copper phthalocyanines, type ε among many other pigment crystals types has been reported to be sensitive for the longest wavelength. However, type X metal-free phthalocyanine is a metastable crystal type, which is difficult to manufacture and achieve stable quality. Although the ε type of copper phthalocyanine has high spectral sensitivity for longer wavelengths compared to the α and β types of copper phthalocyanine, the sensitivity drops at 800 nm compared to 780 nm, and this makes it unfit for use with semiconductor laser with fluctuating emission wavelength. It is known that copper phthalocyanine has electrostatic property, dark decay and sensitivity that can vary significantly depending on whether the pigment crystals type is α, β, γ or ε (see, for example, Non-Patent document 1), and spectral sensitivity has been also reported to vary because absorption spectrum varies depending on the pigment crystals type (see, for example, Non-Patent document 2).

Thus the difference in electrical characteristics depending on the pigment crystals type is well known with respect to metal-free phthalocyanines and many other metallophthalocyanines, and much effort has been made to produce pigment crystals type with satisfactory electrical characteristics. Many pigments are synthesized or subsequently treated in water to form primary particles adjusted for size and shape, and these particles are likely to agglutinate in subsequent processes, especially in the drying process, to form secondary particles. It is therefore necessary to refine these particles in the dispersion process.

Examples of general methods for controlling (refining) the crystal type of organic pigment include, in addition to the method of controlling during the synthesis step, the so-called sulfuric acid method (Patent document 6), such as the acid pasting method and the acid slurry method, a method involving dissolution or amorphous formation by grinding methods such as the solvent milling method, the dry milling method and the salt milling method followed by conversion to a desired crystal type (Non-Patent document 3), and a method involving heating dissolution of an organic pigment in solvent under a heating condition followed by slow cooling for crystallization (Patent document 7). In addition, as a method for controlling the crystal type for organic thin film, the method of controlling sublimation temperature to attain a desired crystal type (Patent document 8) is commonly used.
Patent document 1: Japanese Patent Application Laid-Open No. 2003-327588
Patent document 2: Japanese Patent Application Laid-Open No. 11-349877
Patent document 3: Japanese Patent Application Laid-Open No. 10-31275
Patent document 4: Japanese Patent Application Laid-Open No. 7-61117
Patent document 5: Japanese Patent Application Laid-Open No. 64-26444
Patent document 6: Japanese Patent Application Laid-Open No. 5-72773
Patent document 7: Japanese Patent Application Laid-Open No. 2003-160738
Patent document 8: Japanese Patent Application Laid-Open No. 2003-003084
Patent document 9: Japanese Patent Application Laid-Open No. 2004-262807
Non-Patent document 1: Senryo-to-Yakuhin (Dyes and Chemicals), Vol. 24 No.6, p122 (1984)
Non-Patent document 2: Denshi Shashin Gakkaishi (Electrophotography), Vol. 22, No.2, p111 (1984)
Non-Patent document 3: Shikizai-Kyokai (Japan Society of Color Material), et al., "41st Ganryo Nyumon Koza Text (Textbook of First Course of Pigment)(1999)"

### DISCLOSURE OF THE INVENTION

However, the known method described above has been used conventionally to manufacture a pigment only by the process of applying the energy required to prepare a pigment crystal from a precursor of the pigment. The resultant pigment has varying crystal types, particle sizes, aggregation property and dispersibility, and attaining desired levels stably has been difficult.

It is therefore an object of the present invention to provide a method for manufacturing pigment crystals with sufficiently high purity and sufficiently stable crystal type, particle size, and aggregation property and dispersibility to produce a desired stable composition, that is necessary to provide a pigment crystal (preferably a crystal that can be suitably used in both liquid and solid phase), and to provide an intermediate chemical substance as the intermediate to achieve this object.

The present inventors have studied in detail external energy application conditions and related pigment production and pigment crystals state when manufacturing pigment crystals forming a ring with a stable multicyclic structure directly from a precursor having the multicyclic structure (preferably via retro Diels-Alder reaction). As a result, the inventors have found an intermediate chemical substance during the process of transformation from a pigment precursor (S₀) of initial-phase structure to pigment crystals (S₃) of final-phase structure, which has a distinct first displacement structure (S₁) or a second displacement structure (S₂), which differs from those of the pigment precursor (S₀) and pigment crystals (S₃). Concretely, the inventors have recognized that in a pigment precursor (S₀) with a multicyclic structure, the state in which a first-structure portion was present in a whole molecule as a result of variation in the multicyclic structure was the first displacement structure (S₁), and the subsequent state in which a distinct second-structure portion was present in a whole molecule was the second displacement structure (S₂). Of course, the inventors have also recognized intermediate areas, i.e., an area consisting, in part, of the pigment precursor (S₀) and mostly of the first displacement structure (S₁), an area consisting, in part, of the first displacement structure (S₁) and mostly of the second displacement structure (S₂), and an area consisting, in part, of the second displacement structure (S₂), and mostly of the pigment crystals (S₃) having the multicyclic structure in stable form.

The present invention has been completed by establishing a method for manufacturing pigment crystals unfit for production by conventional methods that can be used for preparing a pigment crystal with sufficiently high purity and sufficiently controlled crystal type, particle size, and aggregation property and dispersibility to produce a desired uniform composition, in both solid and liquid phases, by specifying conditions for pigment crystalslization reaction (external energy conditions) to attain the two displacement structures (S₁) and (S₂) [the intermediate areas described above are also considered herein] and using them as intermediates in the pigment crystalslization reaction that transforms the pigment precursor (S₀), i.e., a structure just before crystallization, to the pigment crystals (S₃), i.e., a structure in the final phase. The above object may be attained by the embodiments of the present invention described below.

The present invention provides [1] an intermediate chemical substance used in a method for producing pigment crystals by transforming a molecular structure of a pigment precursor (S₀) to obtain pigment crystals (S₃), the intermediate chemical substance
comprising a first displacement structure (S₁) or a second displacement structure (S₂), which differs from the pigment precursor (S₀) and the pigment crystals (S₃).

In another preferred embodiment, the present invention provides [2] the intermediate chemical substance according to [1] wherein the molecular structure transformation is performed by retro Diels-Alder reaction.

In another embodiment, the present invention provides [3] a for producing an intermediate chemical substance generated when a pigment precursor (S₀) is transformed into pigment crystals (S₃) through a molecular structure transformation, the intermediate chemical substance having a first displacement structure (S₁) differing from the pigment precursor (S₀) and the pigment crystals (S₃), the method comprising the step of providing the pigment precursor (S₀) with preparatory conditions to obtain the first displacement structure (S₁) as an intermediate chemical substance.

[4] A method for producing an intermediate chemical substance generated when a pigment precursor (S₀) is transformed into pigment crystals (S₃) through a molecular structure transformation, the intermediate chemical substance having a second displacement structure (S₂) differing from the pigment precursor (S₀) and the pigment crystals (S₃), the method comprising the step of providing the pigment precursor (S₀) with preparatory conditions to obtain the second displacement structure (S₂) as an intermediate chemical substance.

In another preferred embodiment, the present invention provides [5] the method for producing an intermediate according to [3] or [4], wherein the molecular structure transformation is performed by retro Diels-Alder reaction.

In another embodiment, the present invention provides a method for producing pigment crystals as described below for providing pigment crystals (S₃) by a molecular structure transformation of a pigment precursor (S₀).

[6] A method for producing pigment crystals comprising using an intermediate chemical substance having a first displacement structure (S₁), which differs from the pigment precursor (S₀) and the pigment crystals (S₃).

[7] A method for producing pigment crystals comprising using an intermediate chemical substance having a second displacement structure (S₂), which differs from of the pigment precursor (S₀) and the pigment crystals (S₃).

[8] A method for producing pigment crystals comprising the independent steps of 1) transforming the pigment precursor (S₀) into the first displacement structure (S₁), 2) transforming the first displacement structure (S₁) into the second displacement structure (S₂), and 3) transforming the second displacement structure (S₂) into the pigment crystals (S₃).

[9] A method for producing pigment crystals comprising the continuous steps of 1) maintaining the step of transforming the pigment precursor (S₀) into the first displacement structure (S₁) for a given time, 2) maintaining the step of transforming the first displacement structure (S₁) into the second displacement structure (S₂) for a given time, and 3) maintaining the step of transforming the second displacement structure (S₂) into the pigment crystals (S₃) for a given time.

In another preferred embodiment, the present invention provides [10] the method for producing pigment crystals according to any one of [6] to [9], wherein the molecular structure transformation is performed by retro Diels-Alder reaction.

[11] The method for producing pigment crystals according to [10], wherein the pigment precursor (S₀) has at least one structure selected from the group consisting of structures represented by the following general formulas A, B, C and D: 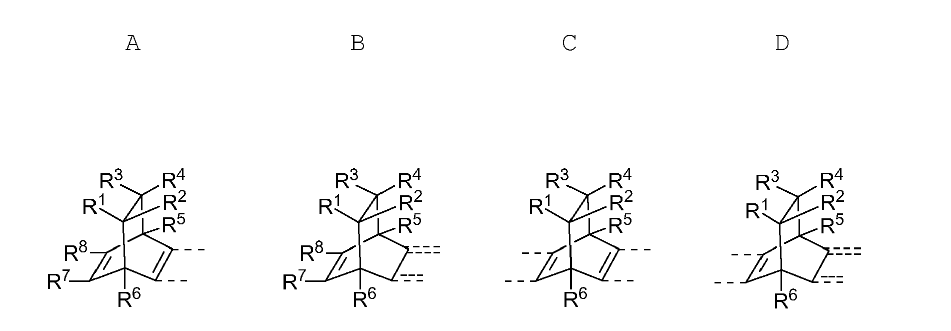 wherein R¹ to R⁴ independently represent a hydrogen atom or a directly or indirectly bonded group that makes the precursor soluble in a solvent, and R⁵ to R⁸ independently represent a hydrogen atom or a directly or indirectly bonded substituent.

[12] The method for producing pigment crystals according to any one of [6] to [11], wherein the pigment crystals (S₃) are homogeneous crystals.

In another embodiment, the present invention provides [13] a pigment crystal obtained by a method for producing pigment crystals according to any one of [6] to [12].

In another embodiment, the present invention provides [14] an ink-jet recording method according to [13], wherein a pigment crystal is used as ink coloring material for ink-jet recording.

[15] A recorded image which is formed with a pigment crystal according to [13].

The present invention provides an intermediate chemical substance used in the method for producing pigment crystals (S₃) from a pigment precursor (S₀), which has a first displacement structure (S₁) or a second displacement structure (S₂), which differs from the pigment precursor (S₀) and the pigment crystals (S₃).

The present invention also provides a method for manufacturing pigment crystals with sufficiently high purity and sufficiently stable desired crystal type, particle size, and aggregation property and dispersibility to produce a desired composition, that can be suitably used in both liquid and solid phase, using the intermediate chemical substances in the pigment crystalslization process.

### BRIEF DESCRIPTION OF THE DRAWINGS

FIG. 1 is an image view describing the retro Diels-Alder reaction according to the present invention;
FIG. 2 is an image view describing the retro Diels-Alder reaction according to the present invention;
FIG. 3 is an image view describing the Diels-Alder reaction;
FIG. 4 is a scheme showing the method of synthesizing a precursor of a thioindigo pigment used in the present invention;
FIG. 5 is a graph showing the XRD spectrum by Cukα characteristic X-ray and simulation results (triclinic P-1) of the precursor of a thioindigo pigment used in an example;
FIG. 6 is a graph showing the XRD spectrum by Cukα characteristic X-ray and simulation results (P2₁/c) of pigment crystals prepared from the precursor of a thioindigo pigment used in an example by thermal treatment at 200°C for 5 minutes;
FIG. 7 is a graph showing the XRD spectrum by Cukα characteristic X-ray and simulation results (P2₁/n) of a commercial thioindigo pigment crystals;
FIG. 8 is a graph showing DSC-XRD analysis results of the pigment crystalslization process of an organic pigment using retro Diels-Alder reaction;
FIG. 9 is a scheme showing the method of synthesizing a precursor of a quinacridone pigment used in the present invention; and
FIG. 10 is a schematic view showing the energy profile produced when manufacturing pigment crystals continuously according to the pigment crystals manufacturing method of the present invention by maintaining individual manufacturing conditions for the displacement structures for a given time.

### BEST MODE FOR CARRYING OUT THE INVENTION

The present invention is further described in detail using the preferred embodiments below.

### [Molecular structure transformation]

Molecular structure transformation as used herein refers to a phenomenon in a compound in which when exposed to external energy (agitation, heat energy, light energy or combinations thereof), the molecular structure of the compound changes, such as, for example, a shift from an organic compound soluble in solvent to another organic compound insoluble in the solvent as a result of eliminating a group having solvent solubility by exposure to energy and a transformation from a multicyclic structure to a stable monocyclic structure by partial elimination of atoms. Concrete examples include a retro Diels-Alder reaction and a so-called latent reaction which utilizes a BOC group (a butoxy oxycarbonyl group) for protection and deprotection, which is used to protect an amino group, and preferably the retro Diels-Alder reaction described later is used.

### [Retro Diels-Alder reaction]

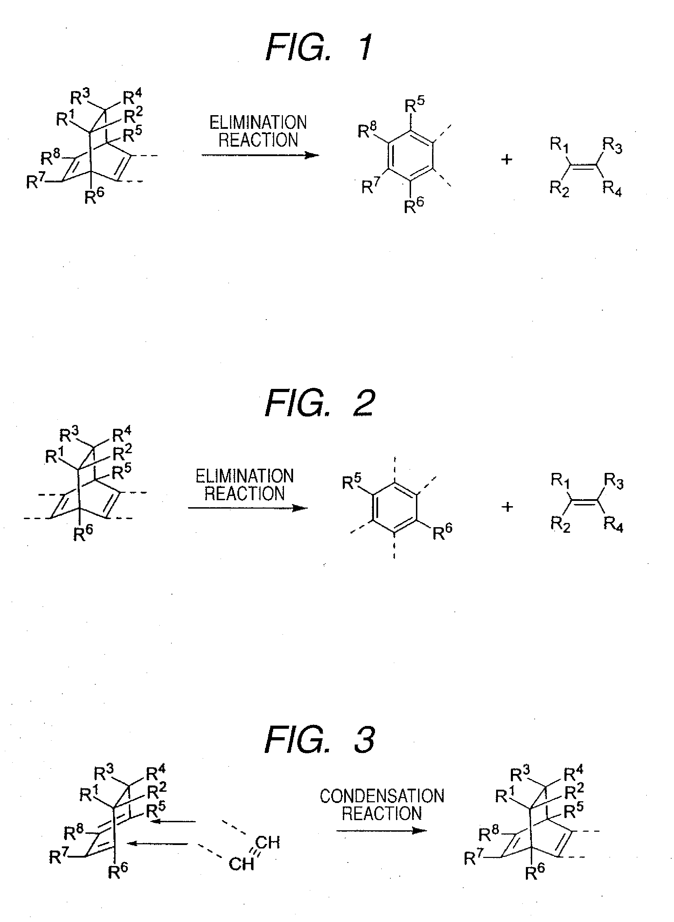

The "retro Diels-Alder reaction" as used herein means a reversed reaction of the Diels-Alder reaction, but unlike the general Diels-Alder reaction between diene and dienophile compounds, i.e., an equilibrium reaction (reversible reaction) between exothermic reaction (Diels-Alder reaction) and endothermic reaction (retro Diels-Alder reaction), an aromatic ring is formed as a result of partial elimination of a multicyclic condensed ring. This is a preferable molecular structure transformation means of the present invention. For example, as shown in FIGS. 1 and 2, in a compound (pigment precursor compound) having a condensed ring structure of bicyclo-[2,2,2]-octadiene skeleton, the cross-linking portion of the condensed ring structure is detached as an ethylene compound to form an aromatic ring (irreversible reaction).

In addition, the retro Diels-Alder reaction of the present invention means that the above ethylene compound is detached through concerted reaction before the aromatic ring is formed. Concerted reaction refers to a reaction that forms no reactive intermediates, such as ion and radical species, and the elimination reaction of the ethylene compound is accomplished using only molecular constituent elements of the pigment precursor compound. Thus, no impurities associated with the side reaction with the solvent are generated during the process of elimination of the ethylene compound from the pigment precursor compound, allowing for the quantitative formation of an aromatic ring in both solid and liquid phase. Given these features, an organic pigment crystals (homogeneous crystal) having extremely high purity may be synthesized by eliminating an ethylene compound from a pigment precursor compound followed by pigment crystalslization.

Furthermore, by introducing a substituent that enhances solvent solubility directly or indirectly into the elimination site (R¹, R², R³ and R⁴ in Figs. 1 and 2), solvent solubility of a compound may be altered. Concretely, R¹ to R⁴ represent a group that binds directly or indirectly to an elimination portion and donates solubility, and R⁵ to R⁸ are not limited to a group donating solubility and represent a hydrogen atom or a substituent. R¹ to R⁴ are substituents that bind to the elimination portion and are detached along with the elimination portion, and R⁵ to R⁸ are substituents that are replaced on an aromatic ring formed by elimination of the elimination portion. As long as the object of the present invention is not impaired, i.e., as long as partial elimination of substituents R¹ to R⁴ and substituents R⁵ to R⁸ results in a "stable ring" formed from the multicyclic structure of a precursor, any combination thereof is possible. Energy sources, adducts/catalysts that will be required for elimination may be selected according to the structure. Concretely, substituents R¹ to R⁴ may be a hydrogen atom or a polar substituent that provides for solubility in hydrophilic medium consisting of water and water-soluble organic solvent, including an oxygen-containing hydroxy group, alcohol groups, alkylene oxide groups, carboxyl groups, nitrogen-containing amino groups, and sulfur-containing sulfone groups. In addition to polar groups, alkyl groups, aryl groups, alkoxy groups, mercapto groups, ester groups and halogen atoms may be used. Furthermore, as required, R¹ and R³, and R² and R⁴ may together form a ring.

In this case, an elimination portion with a group having solvent affinity is detached by the retro Diels-Alder reaction, resulting in a compound (solvent insoluble compound) with a pi-conjugated system. In a preferred aspect, the molecular structure is designed such that the higher structure of a molecule shifts from bulky to flat structure as a result of formation of a pi-conjugated system. This way, the desired association and crystal properties of a compound (solvent insoluble compound) may be attained which is prepared from a pigment precursor compound (solvent soluble compound) according to the present invention by use of the retro Diels-Alder reaction.

In addition, the elimination portion detached from the compound may be made extremely stable and safe by use of the retro Diels-Alder reaction of the present invention, and the reaction may be designed to induce no reversible or subsidiary reaction that may have adverse effects on the system.

In addition, a structural portion undergoing the retro Diels-Alder reaction of the present invention may be formed using the Diels-Alder reaction shown in FIG. 3. The reason is that the effectiveness of the present invention will be unaffected, because the reaction is an irreversible reaction unlike the general Diels-Alder reaction as shown in Figs. 1 and 2.

### [Chemical substance as an intermediate used in the method for manufacturing pigment crystals]

First, a chemical substance as an intermediate used in the method for producing pigment crystals (S₃) from a pigment precursor (S₀), according to the present invention, is described.

The present invention provides a chemical substance occurring during the process from the pigment precursor (S₀) to the pigment crystals (S₃), having a first displacement structure (S₁) or a second displacement structure (S₂), which differs from the pigment precursor (S₀) and the pigment crystals (S₃) and at least distinct from each other, in a structural displacement process involving the first (S₁) and second (S₂) displacement structures.

First, for the first displacement structure (S₁) resulting from the pigment precursor (S₀) as a result of applying external energy E₁ to E₂, the pigment precursor (S₀) loses its multicyclic structure by the action of external energy, and shifts to the first displacement structure (S₁) (referred to as the first step). Structural displacement in this first step results in an amorphous state having no peak in molecular structure or a preparatory phase directed to structural rearrangement. For example, it is known that the first displacement structure (S₁) of a thioindigo pigment precursor is of an amorphous structure of the pigment precursor. This has also been demonstrated by the disappearance of XRD peaks.

The first displacement structure is transformed into the second displacement structure (S₂) as a result of applying external energy E₃ to E₄, which is higher than E₂. (Referred to as the second step). Structural displacement in the second step results in pigment crystalslization in part of the structure, or partial peaks representing preparatory phase directed to crystallization. This has also been demonstrated by XRD measurement results indicating that the number of peaks is smaller than that in the precursor (S₀) and the pigment crystals (S₃), and the spacing of crystal faces distance is large and crystallinity is weak, resulting in unstable crystals.

Unless external energy higher than E₄ is further applied, the compound can be maintained in the state of the second displacement structure (S₂). For example, it is known that the second displacement structure (S₂) of a thioindigo pigment precursor is converted into pigment crystals structure of a cycle longer than that of the thioindigo pigment precursor and the thioindigo pigment crystals. When the second displacement structure has amorphous state while partially forming pigment crystals, molecular-level pigment crystalslization, dispersion and separation in both solid and liquid phases may be made easy.

When external energy further higher than E₄ is applied, conversion of all pigment precursor molecules into the final-phase homogeneous crystals via molecular structure transformation is promoted, resulting in pigment crystals (S₃) of a homogeneous crystals type. The pigment crystals (S₃) of the thioindigo pigment precursor were homogeneous crystals of the P2₁/c crystal type.

Thus, in the method for producing pigment crystals (S₃) from a pigment precursor (S₀), intermediate chemical substances exist during the process from the pigment precursor (S₀) to the pigment crystals (S₃), having a first displacement structure (S₁) or a second displacement structure (S₂), which differs from the pigment precursor (S₀) and the pigment crystals (S₃) and at least distinct from each other, in a structural displacement process involving the first (S₁) and second (S₂) displacement structures. In addition, the number of times of structural displacement, which was twice in the case of the thioindigo pigment precursor, can be other than twice depending on the type of pigment precursor. The number of types of related structural displacement, which was two in the case of the thioindigo pigment precursor, can also be other than two depending on the type of pigment precursor.

The present invention therefore provides a method for producing pigment crystals of desired uniform composition, and intermediate chemical substances leading to the pigment crystals, by clarifying the generation of displacement structures during the process from the pigment precursor (S₀) to the pigment crystals (S₃) and controlling the external energy applied for the generation.

### [Pigment precursor (S₀) used in the method for producing pigment crystals of the present invention]

A pigment precursor (S₀) used in the method for producing pigment crystals of the present invention refers to a precursor converted into a constituent molecule of a pigment. Pigment crystals (S₃) may be any pigment crystals (S₃) as long as the target pigment precursor (S₀) can be synthesized.

Examples of target pigment crystals manufactured according to the present invention preferably include organic pigments, such as metal-free phthalocyanines, various metallophthalocyanines, azo derivatives, quinacridones, indigos, perylenes, multicyclic quinones, benzimidazoles and pyrrolo pyrroles.

Because the method for producing pigment crystals according to the present invention utilizes a molecular structure transformation to manufacture the pigment crystals (S₃) from the pigment precursor (S₀) as described above, it is necessary to use during the process from the pigment precursor (S₀) to the pigment crystals (S₃) a chemical substance having a first displacement structure (S₁) or a second displacement structure (S₂), which differs from the pigment precursor (S₀) and the pigment crystals (S₃) and at least distinct from each other. Solid or liquid phase may be used for pigment crystalslization in the process of manufacturing pigment crystals.

In addition, a pigment precursor (S₀), a first displacement structure (S₁) and a second displacement structure (S₂) dissolved in solvent may be applied on a substrate, so as to form circuit patterns, using normal coating, precision printing or ink-jet recording technologies, and dried to form thin films of respective structures, from which a final-phase pigment crystals (S₃) or pigment crystals of desired uniform composition is manufactured.

Simple and easy methods of transforming a pigment precursor (S₀) into pigment crystals (S₃) include a method using heat. The temperature used for heating is preferably in the range from 50 to 400°C. In the molecular structure transformation suitably used in the method for producing pigment crystals of the present invention, selection of the temperature and means for transformation into the displacement structures (S₁ and S₂) and pigment crystals (S₃) can be made possible by devising the molecular structure of the pigment precursor compound used. Manufacturing conditions can therefore be determined by taking account of properties of a desired pigment crystal, such as heat resistance.

In addition, means of attaining a molecular structure transformation are not limited to heating, and may include other means such as irradiation by UV and visible light, and electromagnetic wave by devising the structure of the portion that is eliminated from a pigment precursor compound by the reaction. In cases where the objective pigment crystals must avoid in-process thermal hysteresis, in particular, irradiation by UV light and so forth described above is an effective means of transformation.

In addition, the crystal type of a final-phase pigment crystals (S₃) depends on the pigment crystals structure of a pigment precursor (S₀), intermolecular interaction, etc. The pigment precursor (S₀) can therefore be transformed into pigment crystals (S₃) of a desired single pigment crystals type through a molecular design thereof.

### [Method for producing an intermediate of the present invention]

The method for producing an intermediate chemical substance occurring in the process of transforming a pigment precursor (S₀) to pigment crystals (S₃) by a molecular structure transformation, according to the present invention, having a first displacement structure (S₁) or a second displacement structure (S₂), which differs from the pigment precursor (S₀) and the pigment crystals (S₃), includes, depending on the type of the intermediate chemical substance manufactured; either
1) the step of transforming the pigment precursor (S₀) into the first displacement structure (S₁), or
2) the step of transforming the pigment precursor (S₀) into the second displacement structure (S₂). By applying the external energy required for the transformation from the pigment precursor (S₀) to the first displacement structure (S₁) or the external energy required for the transformation from the pigment precursor (S₀) to the second displacement structure (S₂), each of these intermediate displacement structures can be produced in a quantitative manner. In addition, adjacent displacement structures, i.e., the pigment precursor (S₀) and the first displacement structure (S₁), and the first displacement structure (S₁) and the second displacement structure (S₂), may be produced in an arbitrary ratio in the method for producing an intermediate chemical substance of the present invention.

### [Method for producing pigment crystals of the present invention]

The method for producing pigment crystals according to the present invention using, during the process from the pigment precursor (S₀) to the pigment crystals (S₃), an intermediate chemical substance having a first displacement structure (S₁) or a second displacement structure (S₂), which differs from the pigment precursor (S₀) and the pigment crystals (S₃) and at least distinct from each other, in order to manufacture the pigment crystals (S₃) from the pigment precursor (S₀) through a molecular structure transformation includes; either
the process of manufacturing the pigment crystals (S₃) from the first displacement structure (S₁), or
the process of manufacturing the pigment crystals (S₃) from the second displacement structure (S₂). By applying the external energy required for the transformation from the first displacement structure (S₁) to the pigment crystals (S₃) or the external energy required for the transformation from the second displacement structure (S₂) to the pigment crystals (S₃), the pigment crystals can be produced in each process in a quantitative manner. In addition, adjacent structures, i.e., the second displacement structure (S₂) and the pigment crystals (S₃), may be produced in a desired uniform composition in the method for producing pigment crystals of the present invention.

In addition, the method for producing pigment crystals according to the present invention includes the process of transforming the first displacement structure (S₁) into the pigment crystals (S₃) and the process of transforming the second displacement structure (S₂) to the pigment crystals (S₃) in order to manufacture the pigment crystals (S₃) from the pigment precursor (S₀) through a molecular structure transformation. Combining manufacturing conditions independently will also provides a method that involves proceeding sequentially with the steps of 1) transforming the pigment precursor (S₀) to the first displacement structure (S₁), 2) transforming the first displacement structure (S₁) to the second displacement structure (S₂) and 3) transforming the second displacement structure (S₂) to the pigment crystals (S₃) while confirming pigment crystalslization produced in each of the steps.

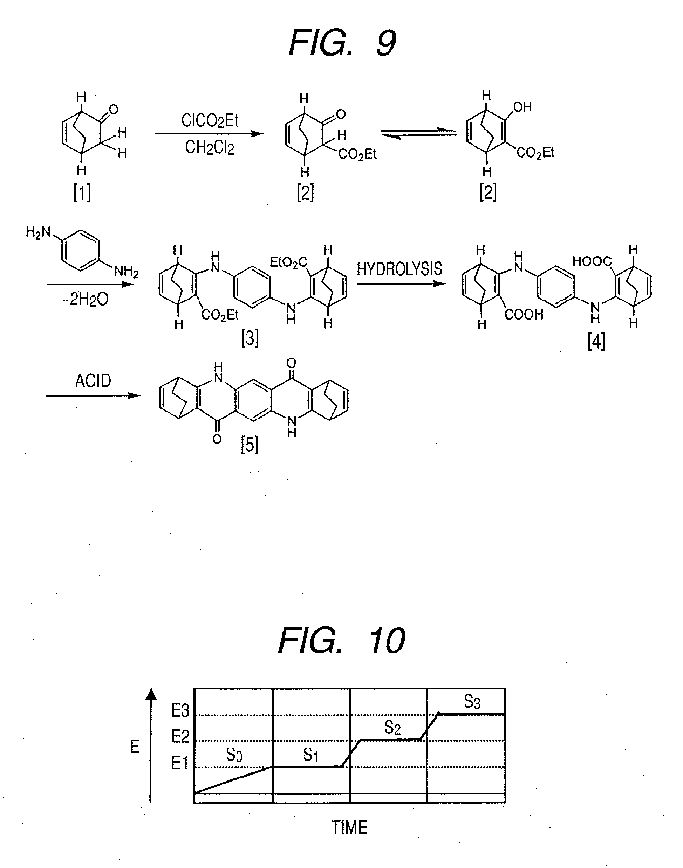

Another method for continuous production by linking the steps involves, as shown in FIG. 10, applying energy E1 for a sufficient time to convert the pigment precursor (S₀) completely into the first displacement structure (S₁), applying energy E2 for a sufficient time to convert the first displacement structure (S₁) completely into the second displacement structure (S₂) and applying energy E3 for a sufficient time to convert the second displacement structure (S₂) completely into the pigment crystals (S₃), wherein energy E3 stimulates the production of the pigment crystals (S₃) as well as increases purity.

Using these manufacturing methods, the final-phase pigment crystals (S₃) can be surely produced from the pigment precursor (S₀) which respect to the pigment crystals of the composition.

In the method for producing pigment crystals of the present invention, the molecular structure transformation reaction used for manufacturing the pigment crystals is performed with so much higher selectivity compared to conventional methods of pigment crystals transition that the accurate analysis and control based thereon of the reaction using a DSC (differential scanning calorimeter)-XRD (X-ray diffractometer) or other equipment is possible. Given these features, the pigment crystalslization phase can be defined accurately by controlling the application of external energy, as described above, and pigment crystals of a conventionally unavailable desired stable composition can be produced.

### Examples

The following examples illustrate the present invention in more detail, but are not intended to limit the scope of the invention. The terms part and % are presented on a weight basis unless stated otherwise.

### [Example 1]

### <Synthesis of a thioindigo pigment precursor compound>

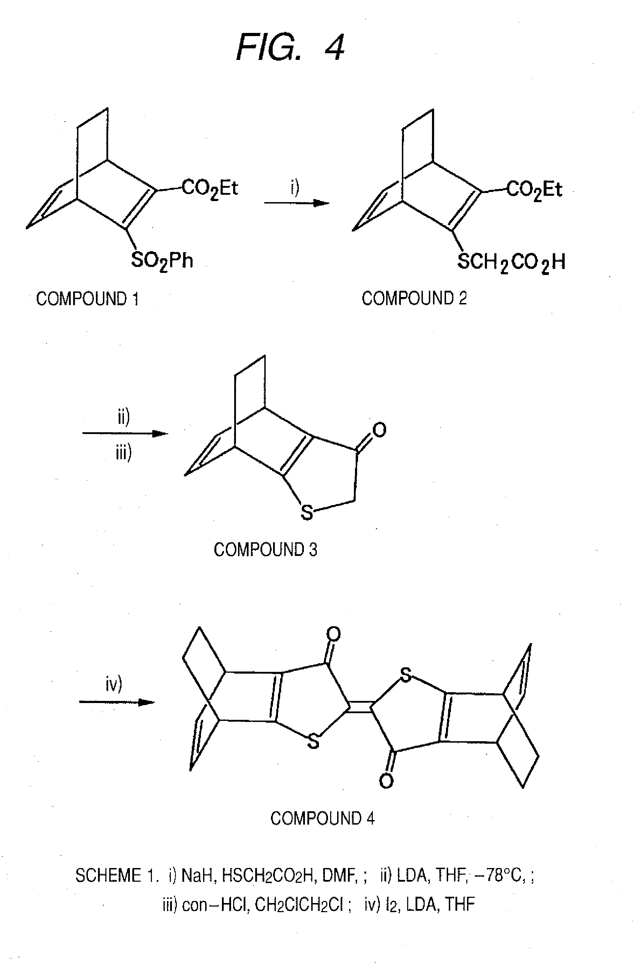

A thioindigo pigment precursor compound used in the implementation of the manufacturing method according to the present invention was synthesized according to the scheme described in Fig. 4. The abbreviations below are used in the following description.
· THF: tetrahydrofuran
· DMF: dimethylformamide

First, Compound 1 used for synthesis was synthesized according to Tetrahedron Letters, Vol.22, No. 35, 1981, pp.3347-3350. The compound represented by [2] was then synthesized as described below using Compound 1 represented by [1] in the formula below.

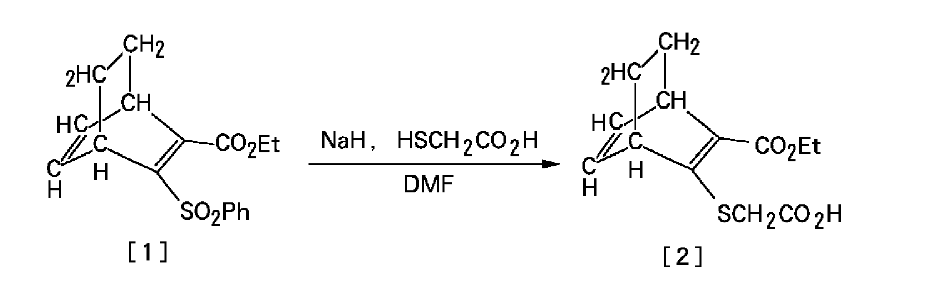

First, sodium hydride (NaH, 0.062 g, 2.60 mmol) was placed in a 50 ml eggplant-shaped flask, dry-DMF (2 ml) was added after nitrogen purge, and cooled in water bath. Separately, the compound represented by [1] (0.200 g, 0.62 mmol) described above was placed in a 25 ml pear-shaped flask, dry-DMF was added after nitrogen purge, thioglycollic acid (0.090 ml, 1.30 mmol) was added, and the mixture was dripped gradually into the above 50 ml eggplant-shaped flask with a transfer tube, followed by stirring for one hour. After confirming the completion of reaction by TLC (thin layer chromatography), 0.1 M citric acid solution was added to the reaction vessel until pH 3, and extraction with ethyl acetate was performed. The organic layer from the extraction was washed with 5% HCl, dried over anhydrous sodium sulfate and concentrated under reduced pressure. Purification of the resultant concentrate by silica gel column chromatography (eluent: EtOAc/Hexane) gave the objective compound [2] (0.29 g, yield: 87.8%).

The compound represented by [3] was then synthesized as described below using Compound 2 represented by [2] in the formula below.

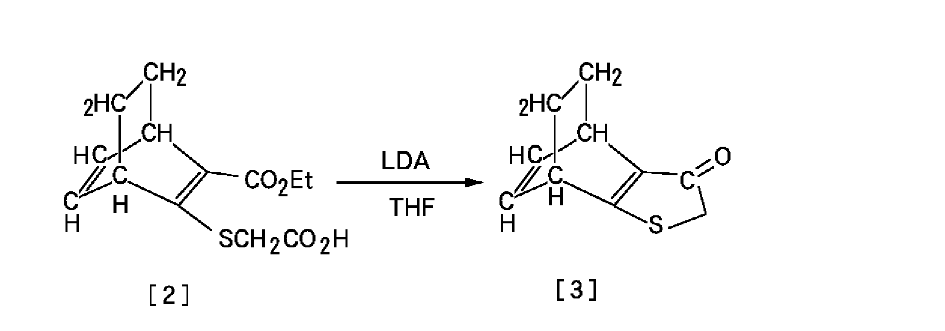

First, dry-THF (5.5 ml) and diisopropyl amide (0.68 ml, 4.84 mmol) were placed in a 25 ml eggplant-shaped flask after nitrogen purge, cooled to 0°C, and n-butyllithium was dripped slowly thereto. The reaction vessel was cooled to -78°C. Separately, the compound represented by [2] (0.325 g, 1.21 mmol) was placed in a 25 ml pear-shaped flask, dry-THF (2 ml) was added after nitrogen purge, and the mixture was dripped into the above flask with a transfer tube, followed by stirring for one hour. After confirming the completion of reaction by TLC, 5% HCl was added to the reaction vessel to pH 2, extraction with ethyl acetate was performed, and the organic layer was dried over anhydrous sodium sulfate and concentrated. The concentrate was then dissolved in dichloroethane, two to three drops of concentrated hydrochloric acid were added followed by stirring for five hours, washed with water, and dried over anhydrous sodium sulfate and concentrated. Purification by silica gel column chromatography (EtOAc/Hexane) gave the objective compound [3] (0.16 g, yield: 74%).

The compound represented by [4] was then synthesized as described below using Compound 3 represented by [3] in the formula below. 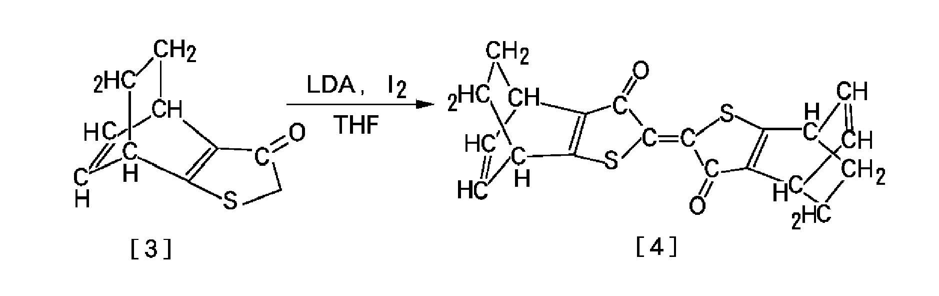 First, the compound represented by [3] above (0.120 g, 0.67 mmol) was placed in a 50 ml eggplant-shaped flask, dry-THF was added after nitrogen purge, and the reaction vessel was cooled to -78°C. Separately, dry-THF (5.5 ml) and diisopropyl amide (0.68 ml, 4.84 mmol) were placed in a 25 ml eggplant-shaped flask after nitrogen purge, cooled to 0°C, and n-butyllithium was dripped slowly thereto. This solution was added to the above 50 ml eggplant-shaped flask by a transfer tube, iodine (0.102 g, 0.80 mmol) was then added and stirred for three hours. The reaction was stopped with water, and extraction with ethyl acetate was performed. The organic layer from the extraction was dried over anhydrous sodium sulfate and concentrated under reduced pressure. Purification by silica gel column chromatography (EtOAc/Hexane) gave the objective compound, a thioindigo pigment precursor represented by [4] (0.027 g, yield: 23%).

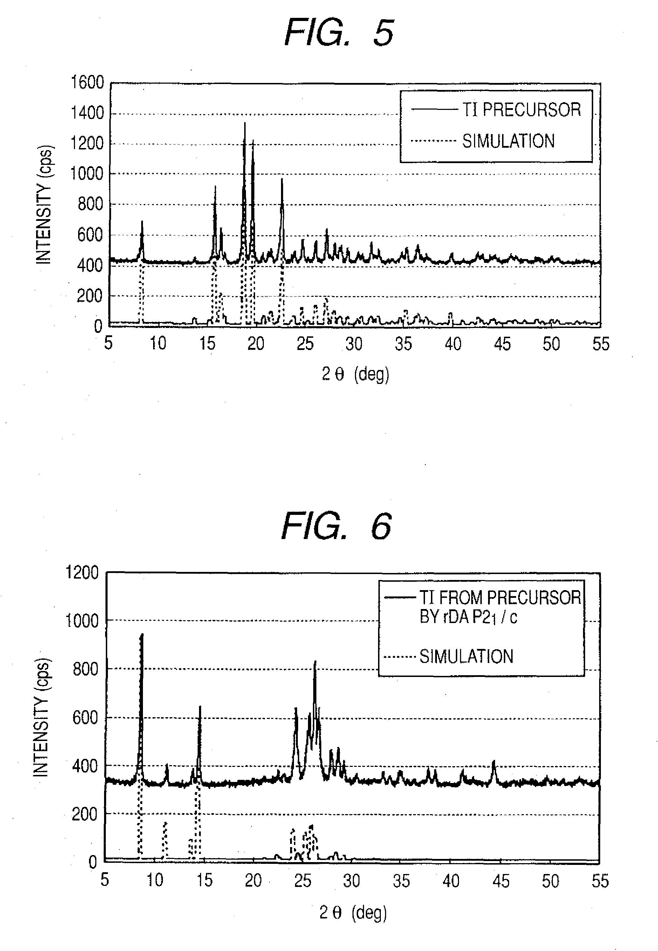

The X-ray diffraction of the above thioindigo pigment precursor using CuKα characteristic X-ray (wave length = 1.541 Å) revealed the lattice constant shown in Table 1. The equipment used was the powder X-ray diffractometer (XRD) RINT2000 (trade name) available from Rigaku Co., Ltd. FIG. 5 presents the XRD spectrum measured with the equipment and simulation results from using the pigment crystals structure analysis software CrystalStructure Ver.3.6.0, available from Rigaku Co., Ltd.

**Table 1: Analysis result**

| | Lattice constant |
|---|---|
| a | 5.891 |
| b | 6.474 |
| c | 10.710 |
| alpha | 86.51 |
| beta | 79.61 |
| gamma | 84.09 |

Analysis results of the lattice constant showed that the resultant crystal was a single pigment crystals of the pigment crystals type triclinic P-1. FIG. 6 presents the XRD spectrum of the second displacement structure (S₂) from the thioindigo pigment precursor, heat-treated at not less than 165.7°C presented in Table 2 below, a temperature required for the pigment crystals (S₃), as measured with the same equipment above using CuKα characteristic X-ray (wave length = 1.541 Å), and simulation results from using the same pigment crystals structure analysis software and the lattice constant of P2₁/c (pigment crystals type I) described in H. von Eller, Bull Chem. Soc. Fr., 1955, 106, 1426.

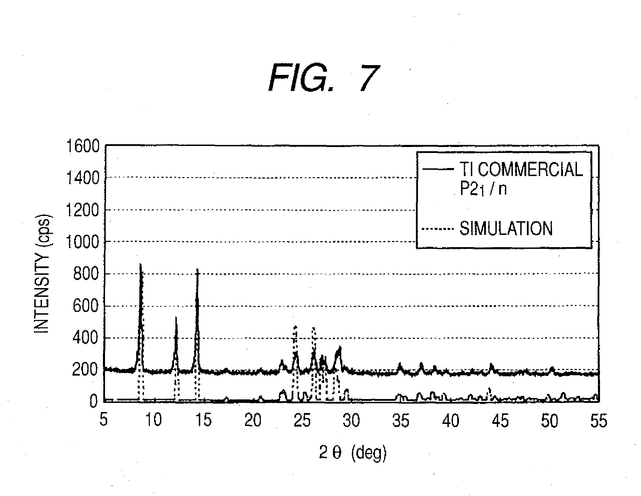

FIG. 7 presents the XRD spectrum of a commercial thioindigo pigment crystals as measured with the same equipment as above using CuKα characteristic X-ray (wave length = 1.541 Å), and simulation results from using the same pigment crystals structure analysis software and the lattice constant of P2₁/n (pigment crystals type II) described in W. Haase-Wessel, M. Ohmasa and P. Susse, Naturwissenschaften, 1977, 64, 435.

As is apparent from a comparison of FIGS. 5 to 7, a high-purity (in terms of quantity) thioindigo pigment crystals of the crystal type unavailable from commercial sources can be produced in homogeneous crystal form (uniform crystal type) without crystal mixing, using the method for producing pigment crystals of the present invention.

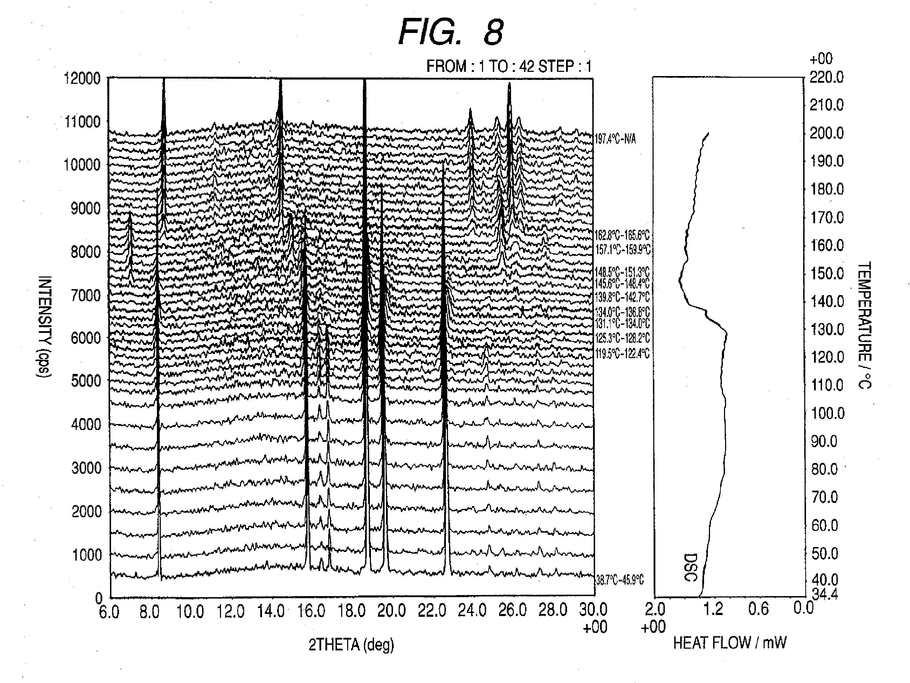

FIG. 8 and Table 2 present analysis results of the pigment crystals state of the pigment precursor (S₀), the first displacement structure (S₁), the second displacement structure (S₂) and the pigment crystals (S₃) from the thioindigo pigment precursor prepared above, as measured with the powder X-ray diffractometer RINT-Ultima II (simultaneous measuring apparatus for X-ray diffraction and differential scanning calory, trade name: XRD-DSC II), available from Rigaku Co., Ltd, using CuKα characteristic X-ray (wavelength = 1.541 Å).

**Table 2: Transformation status in each category**

| Ambient reaction temperature | Structure name | Bragg angle (26±0.1) [°] |
|---|---|---|
| below 142.7°C | thioindigo precursor (equivalent to a precursor as a pigment precursor (S₀)) | 8.38, 15.78, 16.40, 16.84, 18.74, 19.64, 22.70 |
| 142.8°C ~ 148.4°C | amorphous region (equivalent to the first displacement structure (S₁) | No peak due to an amorphous structure |
| 148.5°C ~ 165.6°C | metastable crystal region (equivalent to the second displacement region (S₂)) | 7.02, 15.00, 15.64, 25.42, 25.96 25.42, 25.96 |
| over 165.7°C | stable crystal region (equivalent to crystal (S₃)) | 8.72, 11.26, 14.46, 14.52, 23.96, 25.32, 25.86, 26.40 |

As shown in the table, in the first-phase structural displacement in which the pigment precursor (S₀) shifts to the first displacement structure (S₁), the thioindigo pigment precursor is in amorphous state having no peak in molecular structure. The second displacement structure (S₂) has preliminary-phase peaks preceding crystallization at five points. XRD measurement results indicate that because the number of peaks is smaller than the number 7, found in the precursor (S₀), and 8, found in the pigment crystals (S₃), the spacing of crystal faces is large and crystallinity is weak, resulting in unstable crystals.

As shown in FIG. 8 and Table 2, in the above case showing an embodiment of the method for producing pigment crystals of the present invention which involves preparing a pigment precursor compound and heating the compound to form pigment crystals, the pigment crystals state was confirmed to change according to temperature zones. This indicates the possibility of controlling the pigment crystals state, including the crystal type, in individual temperature zones; i.e., an objective pigment crystals of a desired composition can be produced by using these temperature zones according to purposes.

In the case described above, the pigment precursor (S₀) which is in the phase preceding the retro Diels-Alder reaction has a temperature zone of 142.7°C or less, as shown in FIG. 8 and Table 2. The first displacement structure (S₁) has a temperature zone ranging from 142.8 to 148.4°C. The second displacement structure (S₂) has a temperature zone ranging from 148.5 to 165.6°C. The pigment crystals (S₃) is produced at 165.7°C or more.

Consequently, the first displacement structure (S₁) of uniform composition was produced by controlling the temperature condition in the range from 142.8 to 148.4°C to prepare the first displacement structure (S₁) from the pigment precursor (S₀) in the method for producing an intermediate of the present invention. The second displacement structure (S₂) of uniform composition was produced by controlling the temperature condition in the range from 148.5 to 165.6°C to prepare the second displacement structure (S₂) from the pigment precursor (S₀). In addition, the pigment crystals (S₃) of uniform composition was produced by controlling the temperature condition at 165.7°C or more to prepare the pigment crystals from the first (S₁) and second (S₂) displacement structures.

### [Example 2]

### <Synthesis of a quinacridone pigment precursor compound>

A quinacridone pigment precursor compound used in an embodiment of the manufacturing method according to the present invention was synthesized according to the scheme described in FIG. 9.

First, Compound 1 used for synthesis was synthesized according to J. Org. Chem., Vol.61, No. 11, 1996, pp.3794-3798. The compound represented by [2] was then synthesized as described below using Compound 1 represented by [1] in the formula below.

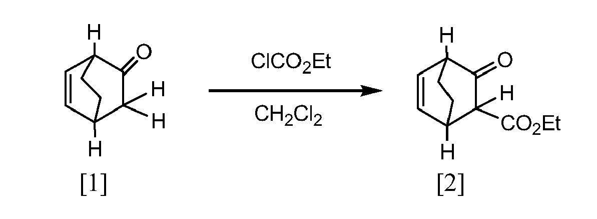

First, Compound 1 [1] (0.318 g, 2.60 mmol) was placed in a 50 ml eggplant-shaped flask and, after nitrogen purge, dry-CH₂Cl₂ (2 ml) was added and cooled. Separately, ethyl chloroformate (0.284 g, 2.62 mmol) was placed in a 25 ml pear-shaped flask, dry-CH₂Cl₂ was added after nitrogen purge, and the mixture was dripped gradually into the above 50 ml eggplant-shaped flask with a transfer tube, followed by stirring for one hour. After confirming the completion of reaction by TLC (thin layer chromatography), the reaction was stopped and extraction with ethyl acetate was performed. The organic layer from the extraction was washed with 5% HCl, dried over anhydrous sodium sulfate and concentrated under reduced pressure. Purification of the resultant concentrate by silica gel column chromatography (eluent: EtOAc/Hexane) gave the objective compound [2] (0.408 g, yield: 80.8%).

The compound represented by [3] was then synthesized as described below using Compound 2 represented by [2] in the formula below.

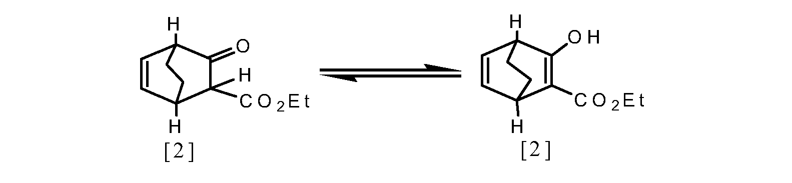

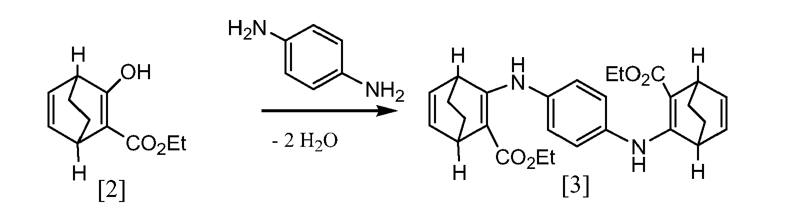

First, after nitrogen purge, dry-Et₂O (20.5 ml) and the compound represented by [2] (0.777 g, 4.00 mmol) were cooled in a 50 ml eggplant-shaped flask. Separately, 1,4-phenylenediamine (0.216 g, 2.00 mmol) was placed in a 25 ml pear-shaped flask, dry-Et₂O (15 ml) was added after nitrogen purge, and the mixture was dripped into the above eggplant-shaped flask with a transfer tube, followed by stirring for one hour. After confirming the completion of reaction by TLC, the reaction was stopped, extraction with ethyl acetate was performed, and the organic layer was dried over anhydrous sodium sulfate and concentrated. Purification by silica gel column chromatography (EtOAc/Hexane) gave the objective compound [3] (0.690 g, yield: 75%).

The compound represented by [4] was then synthesized as described below using Compound 3 represented by [3] in the formula below.

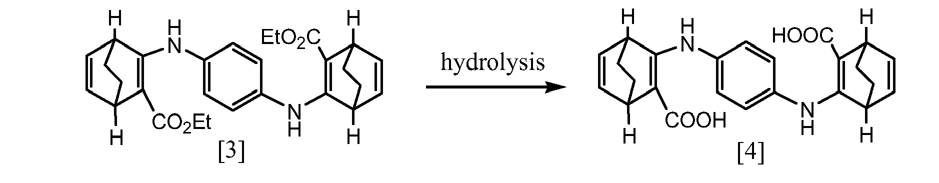

First, the compound represented by [3] (0.921 g, 2.00 mmol) prepared above was dissolved in 30 ml of the solvent DMSO (dimethylsulfoxide) in a 100 ml eggplant-shaped flask. t-Butoxy potassium was added thereto and stirred overnight with heating at 50°C. After the completion of reaction was confirmed by TLC, the reaction was stopped with water and extraction with ethyl acetate was performed. The organic layer from the extraction was dried over anhydrous sodium sulfate and concentrated under reduced pressure. Purification by silica gel column chromatography (EtOH/Hexane) gave the objective compound [4] (0.728 g, yield: 90%).

The compound represented by [5] was then synthesized as described below using Compound 4 represented by [4] in the formula below.

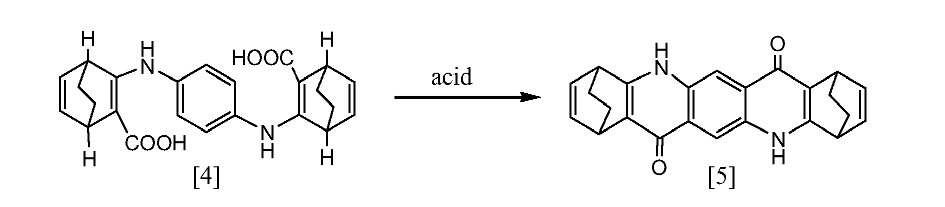

First, the compound represented by [4] (0.808 g, 2.00 mmol) prepared above was dissolved in 30 ml of the solvent dry-DMSO (dimethylsulfoxide) in a 100 ml eggplant-shaped flask. Polyphosphoric acid was added thereto, and stirred overnight with heating at 50°C. After the completion of dewatering cyclization reaction was confirmed by TLC, the reaction was stopped with water and extraction with ethyl acetate was performed. The organic layer from the extraction was dried over anhydrous sodium sulfate and concentrated under reduced pressure. Lastly, purification by silica gel column chromatography (EtOAc/Hexane) gave the objective compound, a quinacridone pigment precursor represented by [5] (0.331 g, yield: 45%).

### [Example 3]

### <Ink using the thioindigo pigment crystals prepared by the method for producing pigment crystals (S₃) from a second displacement structure (S₂) according to Example 1>

The second displacement structure (S₂) of Example 1 was produced under the pigment crystalslization conditions for the pigment crystals (S₃), the resultant thioindigo pigment crystals was dispersed using a styrene-acrylic acid copolymer dispersant, and an ink of 3.5% pigment content was prepared using the dispersion and a solvent containing water, glycerol and ethylene glycol. Color development test of the ink was performed.

### (Color development)

The ink prepared above was filled into an ink cartridge for PIXUS950i manufactured by Canon Inc., and an image was formed using PIXUS950i, an ink-jet image forming apparatus. The media used was PR-101 manufactured by Canon Inc. Visual observation of the image formed for color brightness revealed that a desired pigment crystals state representing pigment crystals (S₃) of uniform composition free of unwanted matter was produced, resulting in an image having superior color development and no color irregularities.

### [Example 4]

### <Ink using the thioindigo pigment crystals prepared by the method for producing pigment crystals (S₃) from a first displacement structure (S₁) according to Example 1>

The first displacement structure (S₁) of Example 1 was first produced under the pigment crystallization conditions for the pigment crystals (S₃), and the resultant thioindigo pigment crystals were dispersed using a styrene-acrylic acid copolymer dispersant. The resultant dispersions were mixed in equal proportions, and an ink of 3.5% pigment content was prepared using the mixture of the dispersions, and a solvent containing water, glycerol and ethylene glycol. Color development test of the ink was performed.

### (Color development)

The ink prepared above was filled into an ink cartridge for PIXUS950i manufactured by Canon Inc., and an image was formed using PIXUS950i, an ink-jet image forming apparatus. The media used was PR-101 manufactured by Canon Inc. Visual observation of the image formed for color brightness revealed that a desired pigment crystals state representing pigment crystals (S₃) of uniform composition free of unwanted matter was produced, resulting in an image having superior color development and no color irregularities.

### [Example 5]

### <Ink using the quinacridone pigment crystals (S₃) prepared from the quinacridone pigment precursor (S₀) in Example 2>

The quinacridone pigment precursor compound synthesized in Example 2 was analyzed in the same manner as Example 1, and the processes involved in pigment crystalslization starting from the quinacridone pigment precursor (S₀) to the pigment crystals (S₃), including the manufacture of intermediates, were implemented sequentially to manufacture the quinacridone pigment crystals (S₃). The resultant quinacridone pigment crystals were dispersed using a styrene-acrylic acid copolymer dispersant, and an ink of 3.5% pigment content was prepared using the dispersion and a solvent containing water, glycerol and ethylene glycol. Color development test of the ink was performed.

### (Color development)

The ink prepared above was filled into an ink cartridge for PIXUS950i manufactured by Canon Inc., and an image was formed using PIXUS950i, an ink-jet image forming apparatus. The media used was PR-101 manufactured by Canon Inc. Visual observation of the image formed for color brightness revealed that a desired pigment crystals state representing pigment crystals (S₃) of uniform composition free of unwanted matter was produced, resulting in an image having the most superior color development ever possible as a result of combining dyeing affinity and good color development.

### [Example 6]

### <Ink using the quinacridone pigment crystals (S₃) prepared from the quinacridone pigment precursor (S₀) in Example 2>

The quinacridone pigment precursor compound synthesized in Example 2 was analyzed in the same manner as Example 1, and the processes involved in pigment crystalslization starting from the quinacridone pigment precursor (S₀) to the pigment crystals (S₃) were maintained for a given time under respective manufacturing conditions to manufacture the quinacridone pigment crystals (S₃). The resultant quinacridone pigment crystals were dispersed using a styrene-acrylic acid copolymer dispersant. The resultant dispersions were mixed in equal proportions, and an ink of 3.5% pigment content was prepared using the mixture of the dispersions, and a solvent containing water, glycerol and ethylene glycol. Color development test of the ink was performed.

### (Color development)

The ink prepared above was filled in to an ink cartridge for PIXUS950i manufactured by Canon Inc., and an image was formed using PIXUS950i, an ink-jet image forming apparatus. The media used was PR-101 manufactured by Canon Inc. Visual observation of the image formed for color brightness revealed that an image was produced that had the most superior color development ever possible as a result of combining dyeing affinity and good color development, because the image had the pigment crystals and amorphous in adequately mixed state.

Because the manufacturing method of the present invention provides otherwise unavailable extremely high-purity pigment crystals having a desired controlled crystal type, particle size, and aggregation and dispersion properties, pigment crystals with various functional characteristics required for various uses that can be made available will expand the scope of application thereof.

This application claims priority to Japanese Patent Application No. 2004-261386, filed on September 8, 2004, which is partially incorporated herein.

## Claims

1. An intermediate chemical substance used in a method for producing pigment crystals by transforming a molecular structure of a pigment precursor (S₀) to obtain pigment crystals (S₃), the intermediate chemical substance
comprising a first displacement structure (S₁) or a second displacement structure (S₂), which differs from the pigment precursor (S₀) and the pigment crystals (S₃).

2. The intermediate chemical substance according to claim 1, wherein the molecular structure transformation is performed by retro Diels-Alder reaction.

3. A method for producing an intermediate chemical substance generated when a pigment precursor (S₀) is transformed into pigment crystals (S₃) through a molecular structure transformation, the intermediate chemical substance having a first displacement structure (S₁) differing from the pigment precursor (S₀) and the pigment crystals (S₃), the method comprising the step of providing the pigment precursor (S₀) with preparatory conditions to obtain the first displacement structure (S₁) as an intermediate chemical substance.

4. A method for producing an intermediate chemical substance generated when a pigment precursor (S₀) is transformed into pigment crystals (S₃) through a molecular structure transformation, the intermediate chemical substance having a second displacement structure (S₂) differing from the pigment precursor (S₀) and the pigment crystals (S₃), the method comprising the step of providing the pigment precursor (S₀) with preparatory conditions to obtain the second displacement structure (S₂) as an intermediate chemical substance.

5. The method for producing an intermediate according to claim 3 or 4, wherein the molecular structure transformation is performed by retro Diels-Alder reaction.

6. A method for producing pigment crystals by transforming a molecular structure of a pigment precursor (S₀) to obtain pigment crystals (S₃), the method comprising using an intermediate chemical substance having a first displacement structure (S₁), which differs from the pigment precursor (S₀) and the pigment crystals (S₃), in the molecular structure transformation.

7. A method for producing pigment crystals by transforming a molecular structure of a pigment precursor (S₀) to obtain pigment crystal (S₃), the method comprising using an intermediate chemical substance having a second displacement structure (S₂), which differs from of the pigment precursor (S₀) and the pigment crystals (S₃), in the molecular structure transformation.

8. A method for producing pigment crystals by transforming a molecular structure of a pigment precursor (S₀) to obtain pigment crystals (S₃), the method comprising using an intermediate chemical substance generated in the molecular structure transformation having a first displacement structure (S₁) and a second displacement structure (S₂), which differ from pigment precursor (S₀) and the pigment crystals (S₃),
further comprising the independent steps of
1) transforming the pigment precursor (S₀) into the first displacement structure (S₁),
2) transforming the first displacement structure (S₁) into the second displacement structure (S₂), and
3) transforming the second displacement structure (S₂) into the pigment crystals (S₃).

9. A method for producing pigment crystals by transforming a molecular structure of a pigment precursor (S₀) to obtain pigment crystals (S₃), the method comprising using an intermediate chemical substance generated in the molecular structure transformation having a first displacement structure (S₁) and a second displacement structure (S₂), which differ from the pigment precursor (S₀) and the pigment crystals (S₃),
further comprising the continuous steps of
1) maintaining the step of transforming the pigment precursor (S₀) into the first displacement structure (S₁) for a given time,
2) maintaining the step of transforming the first displacement structure (S₁) into the second displacement structure (S₂) for a given time, and
3) maintaining the step of transforming the second displacement structure (S₂) into the pigment crystals (S₃) for a given time.

10. The method for producing pigment crystals according to any one of claims 6 to 9, wherein the molecular structure transformation is performed by retro Diels-Alder reaction.

11. The method for producing pigment crystals according to claim 10, wherein the pigment precursor (S₀) has at least one structure selected from the group consisting of structures represented by the following general formulas A, B, C and D: 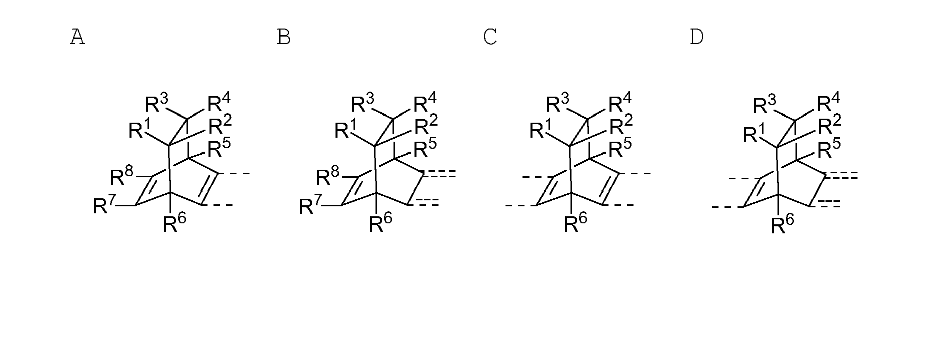 wherein R¹ to R⁴ independently represent a hydrogen atom or a directly or indirectly bonded group that makes the precursor soluble in a solvent, and R⁵ to R⁸ independently represent a hydrogen atom or a directly or indirectly bonded substituent.

12. The method for producing pigment crystals according to any one of claims 6 to 11, wherein n the pigment crystals (S₃) are homogeneous crystals.

13. A pigment crystal obtained by a method for producing pigment crystals according to any one of claims 6 to 12.

14. An ink-jet recording method according to claim 13, wherein said pigment crystal is used as ink coloring material for ink-jet recording.

15. A recording image which is formed with a pigment crystal according to claim 13.
